# EUROPÄISCHE PATENTSCHRIFT

(11) **EP 2 290 751 B1**
(45) Veröffentlichungstag und Bekanntmachung des Hinweises auf die Patenterteilung: **15.04.2015**
(21) Anmeldenummer: 10006994.7
(22) Anmeldetag: 07.07.2010
(51) Int. Cl.: H01R 4/66, H01R 4/04, B62D 27/06, C23C 24/00, B62D 27/02, B62D 29/00, C23C 4/00

(54) **Trägerbauteil sowie Verfahren zum Herstellen eines Trägerbauteils**
Holder component and method for producing same
Composant porteur et procédé de fabrication d'un composant porteur

(30) Priorität: 27.08.2009 DE 102009039064
(43) Veröffentlichungstag der Anmeldung: 02.03.2011
(73) Patentinhaber: Daimler AG, 70327 Stuttgart (DE)
(72) Erfinder: Kropla, Oliver, 21224 Rosengarten (DE)
(74) Vertreter: JENSEN & SON

(56) Entgegenhaltungen:
- WO-A1-2007/137829
- DE-A1- 10 149 178
- DE-A1- 19 519 866
- DE-A1- 19 800 035
- DE-A1-102009 050 924
- DE-B3-102005 024 383
- DE-U1- 29 801 049

## Beschreibung

Die Erfindung betrifft ein Trägerbauteil für eine Karosserie eines Kraftwagens nach dem Oberbegriff von Patentanspruch 1 sowie ein Verfahren zum Herstellen eines Trägerbauteils für eine Karosserie eines Kraftwagens nach dem Oberbegriff von Patentanspruch 5.

Ein derartiges Trägerbauteil und Verfahren zum Herstellen eines derartigen Trägerbauteils sind hinlänglich bekannt. Ein solches Trägerbauteil, beispielsweise in Form eines Querträgers einer Karosserie eines Kraftwagens ist beispielsweise nicht als elektrischer Leiter in der Karosserie des Kraftwagens für elektrische und/oder elektronische Komponenten desselbigen eingesetzt, wobei stattdessen eine Masse des Kraftwagens über separate Leiter in einem oder mehreren Kabelbäumen geführt ist. Eine elektrische Kontaktierung zwischen dem Querträger und der Karosserie ist nicht oder nur zu einem Potenzialausgleich erforderlich.

Des Weiteren ist bekannt, dass ein solcher Querträger als Masse-Leiter eingesetzt ist, wobei der Querträger aus Stahl gebildet ist. Daher ist bei einer Verschraubung mit einem anderweitigen Karosserieelement, beispielsweise einer A-Säule der Karosserie, automatisch ein elektrischer Kontakt hergestellt. Diese Verschraubung ist dabei so ausgelegt, dass gegebenenfalls vorhandene Isolationsschichten des Querträgers und/oder des weiteren Karosserieelements durchdrungen sind. Eine derartige Isolationsschicht kann beispielsweise in Form einer kathodischen Tauchlackierung, anderer Lacke, Verschmutzung und/oder Rost vorliegen.

Darüber hinaus sind Lösungen bekannt, bei denen ein Querträger als Masseleiter eingesetzt ist, wobei der Querträger aus Aluminium gebildet ist. Da Aluminium an Umgebungsluft eine Oxidschicht ausbildet, welche eine elektrische Kontaktierung mit einem Karosserieteil, welches aus Stahl gebildet ist, stark negativ beeinflusst, ist die beschriebene elektrische Kontaktierung zwischen dem Aluminium-Querträger und dem Stahl-Karosserieteil äußerst problembehaftet. Bekannte Lösungen schlagen hierzu beispielsweise eine Verschraubung mittels spezieller Gewinde zwischen dem Querträger aus Aluminium und dem Karosserieteil aus Stahl vor.

Die WO 2007/137829 offenbart ein Trägerbauteil nach dem Oberbegriff des Anspruchs 1 bzw ein Verfahren zu dessen Herstellung nach dem Oberbegriff des Anspruchs 5.

Die DE 10 2005 024 383 B3 offenbart eine Anordnung in einem Kraftfahrzeug mit einer Tragstruktur aus Magnesium, wobei eine selbstschneidende Schraube vorgesehen ist, mittels welcher die Tragstruktur und ein Masse-Potenzial aufweisendes Anschlusselement verbunden sind, um zu erreichen, dass keine Kontaktkorrosion zwischen den Verbindungspartnern auftritt, welche eine elektrische Verbindung zwischen der Tragstruktur und dem Anschlusselement unterbinden würde. Eine Gewährleistung dieser Verbindung ist wichtig für die elektromagnetische Abschirmung eines von der Tragstruktur abgestützten elektronischen Bauteils.

Bei derartigen Verbindungen mittels einer Schraube ist jedoch ein Luftabschluss von Kontaktstellen zwischen den jeweiligen Bauteilen als kritisch anzusehen und nicht hinreichend realisiert bzw. vermieden. Zudem tritt unter mechanischer Belastung ein Kriechen des Leichtmetallwerkstoffs, aus welchem oben genannter Querträger bzw. zweitgenannte Tragstruktur gebildet sind, auf, das den Halt der Schraube in der Tragstruktur verringert bisweilen sogar aufhebt.

Es ist daher Aufgabe der vorliegenden Erfindung, ein Trägerbauteil der eingangs genannten Art sowie ein Verfahren zum Herstellen eines derartigen Trägerbauteils derart weiter zu entwickeln, dass eine verbesserte elektrische Kontaktierung des Trägerbauteils ermöglicht ist.

Diese Aufgabe wird erfindungsgemäß durch die Merkmale des Anspruches 1 hinsichtlich des Trägerbauteils für eine Karosserie eines Kraftwagens sowie durch die Merkmale des Patentanspruches 5 hinsichtlich des Verfahrens gelöst.

Ein Trägerbauteil für eine Karosserie eines Kraftwagens mit zumindest einem im Wesentlichen aus einem Leichtbauwerkstoff gebildeten Trägerelement, welches über wenigstens ein Kopplungselement mit einem Karosserieelement galvanisch koppelbar ist, zeichnet sich erfindungsgemäß dadurch aus, dass das Kopplungselement als eine auf das Trägerelement aufgespritzte Leiterbahn ausgebildet ist. Dadurch wird zwischen dem Trägerelement und dem Karosserieelement, welches beispielsweise im Wesentlichen aus Stahl gebildet ist und eine A-Säule der Karosserie des Kraftwagens sein kann, eine elektrisch gut leitende und insbesondere langlebige Verbindung ermöglicht.

Bei entsprechender Steuerung der Spritzparameter wird beim Anspritzen die Oxidhaut aufgebrochen und eine weitere Bildung in der Folge aufgrund des Luftabschlusses verhindert, so dass die negative Beeinflussung der elektrischen Kontaktierung bzw. der galvanischen Kopplung durch eine sonst auftretende Ausbildung der Oxidhaut am aus Leichtbauwerkstoff gebildeten Trägerelement sowie weitere die galvanische Kopplung negativ beeinflussende Aspekte wie Verschmutzung und/oder Rost unterbunden werden.

Das aufgespritzte Leiterelement ist eine Leiterbahn, die gegebenenfalls sich auch über ein am Trägerelement angeordnetes Kunststoffteil erstrecken kann. Hierbei ist zu beachten, dass die Spritzparameter dergestalt eingestellt sein müssen, dass der Kunststoff nicht beschädigt wird. Des Weiteren wird ein Leiterelement am Trägerelement aufgespritzt, an dem ein elektrisch arbeitendes Anbauteil angeordnet ist, so dass auch zwischen diesen eine sehr gute elektrische Leitung geschaffen wird.

Die Problematik der schlechten elektrischen Leitfähigkeit des mit einer passivierenden Oxidhaut überzogenen Aluminiums kann auch durch das Aufspritzen des Leiterelements umgangen werden, in dem das Leiterelement ohne die Oxidhaut aufzubrechen als Leiterbahn auf dem Trägerelement aufgebracht wird, wobei die Leiterbahn sich von der Anschlussstelle zum Karosserieelement bis hin zum entsprechenden elektrischen am Trägerelement angeordneten Gerät des Fahrzeugs erstreckt. Die elektrische Leitung erfolgt nun nicht im Wesentlichen über das Trägerelement selbst sondern allein über das Leiterelement. Das Trägerelement besitzt dabei nur die tragende Funktion für das auf ihm applizierte Leiterelement.

Ein weiterer Vorteil, der durch das erfindungsgemäße Trägerbauteil erreicht ist, ist der, dass eine Einsparung von Massekabeln in einem Leitungssatz und/oder von Masseverbindern zwischen dem Trägerbauteil, der beispielsweise in Form eines Querträgers der Karosserie vorliegt, und dem Karosserieelement bzw. zwischen dem Trägerbauteil und elektrischen und/oder elektronischen Komponenten, wie zum Beispiel eines Airbags, vorzugsweise eines Beifahrer-Airbags ermöglicht ist. Dies resultiert in einer Einsparung von Kosten und Gewicht sowie Bauraum, wobei insbesondere die Einsparung des Gewichts der Karosserie in einem geringeren Kraftstoffverbrauch und in geringeren CO₂-Emmisionen resultiert.

Das erfindungsgemäße Trägerbauteil, dass beispielsweise im Wesentlichen aus Aluminium oder Magnesium oder einer Legierung der genannten Werkstoffe gebildet ist, kann dabei also mit dem Leiterelement als Masse-Leiter für elektrische und/oder elektronische Komponenten des Kraftwagens dienen, um beispielsweise eine Erdung dieser Komponenten, welche vorteilhafter Weise in einer Umgebung des Trägerbauteils angeordnet sind, zu ermöglichen und zu vereinfachen.

Dabei kann ebenso vorgesehen sein, dass das erfindungsgemäße Trägerbauteil mit anderweitigen Komponenten koppelbar ist, so zum Beispiel eine Stirnwand, ein Sicherungskasten, Steuergeräte oder eine Lenksäule des Kraftwagens.

Eine vorteilhafte Ausführungsform der Erfindung sieht vor, dass das Leiterelement durch ein Flammspritzverfahren ausgebildet ist. Bei dieser Verbindung wird ein Metallpulver auf das Trägerelement aufgebracht, welches dabei die Oxidhaut des vorzugsweise aus Aluminium bestehenden Trägerelements durchschlägt. Hierbei wird unter Luftabschluss eine Aktivierung der galvanischen Kopplung des Kopplungselements in Form des Leiterelements und des Trägerelements durch einen thermomechanischen Auftrag des Leiterelements realisiert, wodurch eine sehr gute und langlebige elektrische Kontaktierung zwischen dem Leiterelement und dem Trägerelement realisiert ist.

Diesen Aspekt der sehr guten und langlebigen galvanische Kopplung des Kopplungselements in Form des Leiterelements und des Trägerelements betrifft auch eine weitere vorteilhafte Ausführungsform der Erfindung, bei der das Leiterelement durch ein Kaltgasspritzverfahren ausgebildet ist. Hierbei erfolgen die Aktivierung der kaltgasgespritzten Verbindung zwischen dem Leiterelement und dem Trägerelement sowie der Luftabschluss durch einen mechanischen Auftrag des Leiterelements.

Ist das Leiterelement zwischen einer zumindest bereichsweise in dem Trägerelement angeordneten Stahlbuchse und dem Trägerelement ausgebildet, wobei das Leiterelement gleichzeitig die Stahlbuchse und das Trägerelement kontaktiert, so birgt dies den Vorteil, dass bereits durch das Aufbringen des Leiterelements die galvanische Kopplung zwischen dem Karosserieelement, an dem das Trägerelement über die Buchse mit einer Schraubverbindung mittels einer Stahlschraube angeschraubt ist, und dem Trägerelement erzielt wird. Die geschaffene Verbindung über die Buchse stellt einen montage- und herstellungstechnisch sehr geringaufwendigen Aufbau dar.

Die Stahlbuchse kann mit einem selbst schneidenden Gewinde in das Trägerelement eingeschraubt sein, wodurch beim Einbringen bzw. Einschrauben der Stahlbuchse die Oxidschicht des Trägerelements aufgebrochen wird, was die galvanische Kopplung zwischen dem Trägerelement und der Stahlbuchse weiter verbessert.

An dieser Stelle sei angemerkt, dass eine galvanische Kopplung und damit eine elektrische Kontaktierung zwischen dem Trägerelement und einer elektrischen und/oder elektronischen Komponente der Karosserie des Kraftwagens dabei in analoger Art und Weise erfolgen kann, was auch auf die im folgenden beschriebenen vorteilhaften Ausführungsformen bzw. auf eine Kombination der Ausführungsformen zutrifft.

Zwar sollte die Befestigung der Stahlbuchse im Trägerelement ohne größere Zufuhr an Wärmeenergie vonstatten gehen, jedoch ist es auch ein Schweißprozess mit geringem Wärmeeintrag wie beim Ultraschallschweißen oder Pressschweißen, gegebenenfalls mit einem Zusatzwerkstoff, denkbar. Die Aktivierung dieser galvanischen Kopplung zwischen dem Trägerelement und der Stahlbuchse erfolgt dabei unter Luftabschluss durch eine thermische bzw. eine thermomechanische Beaufschlagung durch den Schweißprozess.

Aktivierung bedeutet, dass die Verbindung zwischen dem Trägerelement und dem Kopplungselement in Form des Leiterelements bzw. zwischen dem Trägerelement und der Stahlbuchse sowie die oben genannte Kopplung zwischen dem Trägerelement und zumindest einer elektrischen und/oder elektronischen Komponente elektrisch leitfähig gemacht wird.

Bei einer besonders vorteilhaften Ausführungsform der Erfindung ist das Trägerelement mit einem Kunststoff zu einem Hybridbauteil ergänzt. Die Ergänzung des Trägerelements zu einem Hybridbauteil birgt dabei den Vorteil, dass ein Trägerelement geschaffen ist, welches ein geringes spezifisches Gewicht und gleichzeitig einen sehr hohen Funktionserfüllungsumfang aufweist, da durch den Kunststoff sowohl Versteifungsrippen zur Erhöhung einer Steifigkeit des Trägerbauteils als auch Befestigungselemente zur Befestigung angrenzender Bauteile bzw. Komponenten, so zum Beispiel oben erwähnte elektrische und/oder elektronische Komponenten, sowie einstückig auch Anbauteile wie Konsolen und Halter ausbildbar sind. Dadurch sind zusätzliche Befestigungselemente, beispielsweise in Form von Schrauben, vermeidbar, was ein Gewicht der Karosserie des Kraftwagens und damit einen Kraftstoffverbrauch und CO₂-Emmisionen des Kraftwagens gering hält.

Vorteilhafter Weise wird der Kunststoff zur Bildung des Hybridbauteils am Trägerelement durch ein Spritzgussverfahren angebracht, wodurch komplizierteste Geometrien und damit vielfältige Formen der Befestigungselemente, Halter und der Versteifungsrippen realisierbar sind.

In diesem Zusammenhang ist vorteilhafter Weise vorgesehen, dass das Leiterelement zumindest bereichsweise auf den Kunststoff aufgebracht ist. Dadurch ist eine großflächige und/oder lange Ausbildung des Leiterelements ermöglicht, wobei die galvanische Koppelbarkeit zwischen dem Trägerbauteil mit dem mit Kunststoff versehenen Trägerelement und dem weiteren Karosseriebauteil nicht durch den Kunststoff beeinträchtigt und auch über längere Wegstrecken möglich ist.

Ein erfindungsgemäßes Verfahren zum Herstellen eines Trägerbauteils für eine Karosserie eines Kraftwagens, bei welchem zumindest ein im Wesentlichen aus einem Leichtbauwerkstoff gebildetes Trägerelement mit wenigstens einem Kopplungselement zur galvanischen Kopplung mit einem Karosserieelement versehen wird, ist dadurch geschaffen, dass das Kopplungselement als Leiterelement auf das Trägerelement aufgespritzt wird.

Vorteilhafte Ausgestaltungen des Trägerbauteils sind dabei als vorteilhafte Ausgestaltung des Verfahrens anzusehen und umgekehrt.

Durch das erfindungsgemäße Verfahren sind somit alle bereits im Zusammenhang mit dem erfindungsgemäßen Trägerbauteil beschriebenen Vorteile einer sehr guten und langlebigen elektrischen Kontaktierung zwischen dem Kopplungselement und dem Trägerelement realisierbar, da eine negative Beeinflussung dieser elektrischen Kontaktierung in Form einer galvanischen Kopplung durch beispielsweise Verschmutzung, Rost und/oder eine Oxidschicht des Trägerelements vermieden oder zumindest drastisch reduziert wird.

Zudem wird durch das erfindungsgemäße Verfahren der Vorteil erreicht, dass zusätzliche Montageschritte während einer Montage des Kraftwagens vermeidbar sind, da eine nachträgliche Montage eines oder mehrerer Masseverbinder zwischen dem Trägerbauteil und dem Karosserieelement eingespart werden kann. Dadurch ist eine Reduzierung von Gesamtkosten des Trägerbauteils sowie für einen Montageprozess realisiert als auch die Herstellungszeit verkürzt.

Wird das Leiterelement durch ein Flammspritzverfahren aufgespritzt oder, wie bei einer weiteren Ausführungsform des Verfahrens vorgesehen, durch ein Kaltgasspritzverfahren, so birgt dies wie bereits im Zusammenhang mit dem erfindungsgemäßen Trägerbauteil beschriebenen Vorteile einer sehr guten haltbaren Aktivierung der elektrischen Kontaktierung zwischen dem Leiterelement und dem Trägerelement, unter anderem da dies unter völligem Luftabschluss geschieht.

Wird das Trägerelement mit einem Kunststoff zu einem Hybridbauteil ergänzt, und wird das Trägerelement durch ein Spritzgussverfahren mit dem Kunststoff versehen, so birgt dies die alle bereits im Zusammenhang mit dem Bauteil beschriebenen Vorteile eines dadurch hergestellten leichten Trägerbauteils mit einem hohen Funktionserfüllungsumfang.

Wird das Trägerelement durch einen Innenhochdruckumformprozess bearbeitet, so ist dies insofern vorteilbehaftet, als dass dadurch komplizierte Geometrien bei gleichzeitiger geringer Wandstärke ausbildbar sind, wodurch das Trägerbauteil in effizienter Weise bedarfsgerecht an durch das Trägerbauteil zu erfüllende Aufgaben angepasst und ausgebildet werden kann.

Vorteilhafter Weise werden das Spritzgussverfahren und der Innenhochdruckumformprozess in dem gleichem Werkzeug durchgeführt, wodurch Kosten für das Verfahren und somit für das Trägerbauteil absenkbar sind, da einerseits eine Beschaffung eines zusätzlichen Werkzeugs nicht von Nöten ist und andererseits zusätzliche Prozessschritte wie ein Herausnehmen des Bauteils aus einem Werkzeug und ein Verbringen desselbigen in ein anderes Werkzeug vermieden sind, wobei ein Umsetzen in ein Folgewerkzeug zudem zusätzliche Toleranzen in unerwünschtem Maße einbringen würde.

Zur Erfindung gehört auch ein Trägerbauteil für eine Karosserie eines Kraftwagens, mit zumindest einem im Wesentlichen aus einem Leichtbauwerkstoff gebildeten Trägerelement, welches über wenigstens ein Kopplungselement mit der Karosserieelement galvanisch koppelbar ist, wobei erfindungsgemäß alternativ vorgesehen ist, dass Kopplungselement als elektrisch leitfähiger Kunststoff ausgebildet ist. Die Ausbildung des Kopplungselements als elektrisch leitfähiger Kunststoff führt dabei eine Verbesserung der elektrischen Kontaktierung zwischen dem Kopplungselement und dem Trägerelement dadurch herbei, dass eine negative Beeinflussung der elektrischen Kontaktierung in Folge einer Ausbildung einer Oxidschicht des Trägerelements und/oder in Folge einer Verschmutzung und/oder in Folge einer Korrosion dauerhaft vermieden. Dies bedeutet also eine langlebige elektrische Kontaktierung zwischen dem Kopplungselement und dem Trägerelement.

Des Weiteren weist der Kunststoff ein sehr niedriges spezifisches Gewicht auf, wodurch das Gesamtgewicht des so geschaffenen Trägerbauteils gering ist, was bei dessen Verbau mit einem geringeren Kraftstoffverbrauch und damit mit geringeren CO₂-Emmisionen des Kraftwagens einhergeht.

Ist das Trägerelement mit einem Kunststoff und/oder mit dem leitfähigen Kunststoff zu einem Hybridbauteil ergänzt, so ist dadurch, wie bereits im Zusammenhang mit dem zuvor genannten Trägerbauteil beschrieben, der Vorteil erreicht, dass ein Trägerbauteil geschaffen ist, welches ein niedriges spezifisches Gewicht und gleichzeitig einen sehr hohen Funktionserfüllungsumfang aufweist, da durch den Kunststoff beispielsweise Versteifungsrippen zur Versteifung des Trägerbauteils sowie Befestigungselemente zur Anbringung von anderweitigen Bauteilen ausbildbar sind. Hierbei ist nicht zwingend erforderlich, dass der Auftrag des Kunststoffes die Aluminiumoxidschicht bzw. -haut des Trägerelements aufbricht, da der Kunststoff an sich schon elektrisch leitend ist und daher das Trägerelement nicht mehr als elektrischer Leiter verwandt werden muss. Dahingehend ist es vorteilhaft, dass eine Aktivierung nicht durch einen zusätzlichen Arbeitsschritt vorgenommen werden muss, da die Aktivierung des Trägerelements aufgrund der guten elektrischen Leitfähigkeit des speziellen Kunststoffes, der für das Anspritzen am Trägerelement zur Ausbildung von Befestigungselementen etc. sowieso verwandt wird, entfallen kann. Hierbei müssen natürlich die Anschlussstellen an den Enden des Trägerelements zum Karosserieelement hin mit dem leitfähigen Kunststoff bedeckt sein. Es ist auch alternativ denkbar, zuerst einen nicht leitfähigen Kunststoff anzuspritzen unter Ausbildung der besagten Befestigungselemente und Halter und Verrippungen und dann in einem Nachgang eine Schicht elektrisch leitfähigen Kunststoff als Überzug oder nur bereichsweise auf den nicht-leitfähigen Kunststoff aufzuspritzen oder in einer anderen Weise aufzubringen.

Ist das Trägerelement durch ein Spritzgussverfahren mit dem Kunststoff versehen, so birgt dies den Vorteil, dass vielfältige und komplizierte Geometrien von Versteifungsrippen und/oder Befestigungselementen oder anderweitiger Funktionselemente in unkomplizierter und damit kostengünstiger Art und Weise ausbildbar sind.

Ist das Trägerelement durch einen Innenhochdruckumformprozess bearbeitet, was vorteilhafter Weise sowohl auf das erste als auch auf das zweite erfindungsgemäße Trägerbauteil zutreffen kann, so birgt dies in jeglicher Hinsicht den Vorteil, dass nahezu beliebige Geometrien des Trägerbauteils bei einer äußerst geringen Wandstärke effizient ausbildbar sind, wodurch eine Form des Trägerbauteils aufgaben- und damit bedarfsgerecht ausbildbar ist. Gleichzeitig weist es ein geringes Gewicht auf zur Reduzierung eines Gesamtgewichts des Kraftwagens, was mit einem geringen Kraftstoffverbrauch und damit mit geringen CO₂-Emmisionen desselbigen einhergeht.

Es sei an dieser Stelle betont, dass die Gewichtsreduzierung vorteilhafter Weise durch den Einsatz von Aluminium oder Magnesium oder einer Legierung auf Aluminium - oder auf Magnesiumbasis beim Trägerelement des Trägerbauteils erheblich gesteigert wird.

Das erfindungsgemäße Verfahren zum Herstellen eines Trägerbauteils für eine Karosserie eines Kraftwagens, bei welchem zumindest ein im Wesentlichen aus einem Leichtbauwerkstoff gebildetes Trägerelement mit wenigstens einem Kopplungselement zur galvanischen Kopplung mit einem Karosserieelement versehen wird, ist alternativ dadurch geschaffen, dass das Kopplungselement als elektrisch leitfähiger Kunststoff auf das Trägerelement aufgebracht wird.

Vorteilhafte Ausgestaltungen des Trägerbauteils sind dabei wiederum als vorteilhafte Ausgestaltungen des Verfahrens anzusehen und umgekehrt.

Wird vor der Ausbildung des Kopplungselements eine Oxidschicht des Trägerelements zumindest bereichsweise abgetragen, so ergibt sich daraus der Vorteil, dass eine elektrische Kontaktierung und damit galvanische Kopplung zwischen den Kopplungselement in Form des elektrisch leitfähigen Kunststoff und des Trägerelements sehr gut ausbildbar ist, da die erwähnte Oxidschicht eine derartige elektrische Kontaktierung negativ beeinflussen würde. Zudem ist diese Entfernung der Oxidschicht in Folge eines sehr guten Luftabschlusses durch den elektrisch leitfähigen Kunststoffs von langer Dauer, da durch diesen Luftabschluss eine Neubildung der Oxidschicht, welche in chemischer Reaktion des Trägerelements unter Umgebungsluft geschieht, verhindert ist. Bedarfsweise kann zu einem verbesserten Luftabschluss auch ein Dichtmittel auf das Trägerelement oder den Kunststoff aufgebracht und/oder die Kontaktfläche speziell geometrisch, beispielsweise in Form eine Schikane, gestaltet sein.

Wird das Trägerelement mit einem Kunststoff bzw. mit dem leitfähigen Kunststoff durch ein Spritzgussverfahren zu einem Hybridbauteil ergänzt, so birgt dies den Vorteil, dass dadurch der Funktionserfüllungsumfang des Trägerelements und damit des Trägerbauteils in Folge einer Ausbildung beispielsweise von Versteifungsrippen und/oder von Befestigungselementen durch den Kunststoff drastisch erweitert ist. Wird die Ergänzung mit dem leitfähigen Kunststoff durchgeführt, so ist dies insofern vorteilbehaftet, als dass zusätzliches, anderweitiges Kunststoffmaterial und damit dessen Beschaffung unnötig ist, woraus geringere Materialkosten und damit geringere Gesamtkosten des Trägerbauteils als auch des Verfahrens resultieren.

Wird das Trägerelement durch einen Innenhochdruckumformprozess umgeformt, so ergeben sich die bereits in diesem Zusammenhang beschriebnen Vorteile einer dünnwandigen und damit leichteren als auch bezüglich einer Geometrie des Trägerbauteils bedarfsgerechten Ausgestaltung desselbigen auf unkomplizierte und damit kostengünstige Weise.

An dieser Stelle sei angemerkt, dass das Trägerbauteil, beispielsweise als innenhochdruckumgeformtes Rohr (IHU-Rohr) vorliegen kann.

Bei einer weiteren vorteilhaften Ausführungsform der Erfindung ist vorgesehen, dass das Spritzgussverfahren zum Versehen des Trägerelements mit dem Kunststoff und der Innenhochdruckumformprozess in dem gleichen Werkzeug durchgeführt werden. Dies erlaubt eine Reduzierung notwendiger Prozessschritte, was mit einer Kostenreduzierung des Verfahrens einhergeht. Zudem ist nur ein Werkzeug nötig, wodurch Beschaffungskosten für Werkzeuge und damit Gesamtkosten für das Verfahren und für das Trägerbauteil in einem geringen Rahmen gehalten werden können.

Weitere Vorteile, Merkmale und Einzelheiten der Erfindung ergeben sich aus der nachfolgenden Beschreibung bevorzugter Ausführungsbeispiele sowie anhand der Zeichnungen.

Die vorstehend in der Beschreibung genannten Merkmale und Merkmalskombinationen sowie die in der nachfolgend in der Figurenbeschreibung genannten und/oder in den Figuren alleine gezeigten Merkmale und Merkmalskombinationen sind nicht nur in der jeweiligen Kombination, sondern auch in anderen Kombinationen oder in Alleinstellung verwendbar, ohne den Rahmen der Erfindung zu verlassen.

Die Zeichnungen zeigen in:
- Fig. 1: abschnittsweise eine Draufsicht sowie zwei vergrößerte perspektivische Ansichten eines Querträgers aus Aluminium einer Karosserie eines Kraftwagens, welcher über ein Kopplungselement mit einem Karosserieelement galvanisch koppelbar ist, wobei das Kopplungselement als auf den Querträger aufgespritzte Leiterbahn ausgebildet ist und mehrere Möglichkeiten zur Anordnung der Leiterbahn aufgezeigt sind,
- Fig. 2: eine schematische Längsschnittansicht einer möglichen galvanischen Kopplung eines Aluminiumrohrs eines Querträgers einer Karosserie eines Kraftwagens mit einer aus Stahl gebildeten A-Säule der Karosserie über eine Stahlschraube und
- Fig. 3: eine schematische Längsschnittansicht einer möglichen Kopplung eines Aluminiumrohrs eines Querträgers einer Karosserie eines Kraftwagens mit einer aus Stahl gebildeten A-Säule der Karosserie über einen Kunststoff.

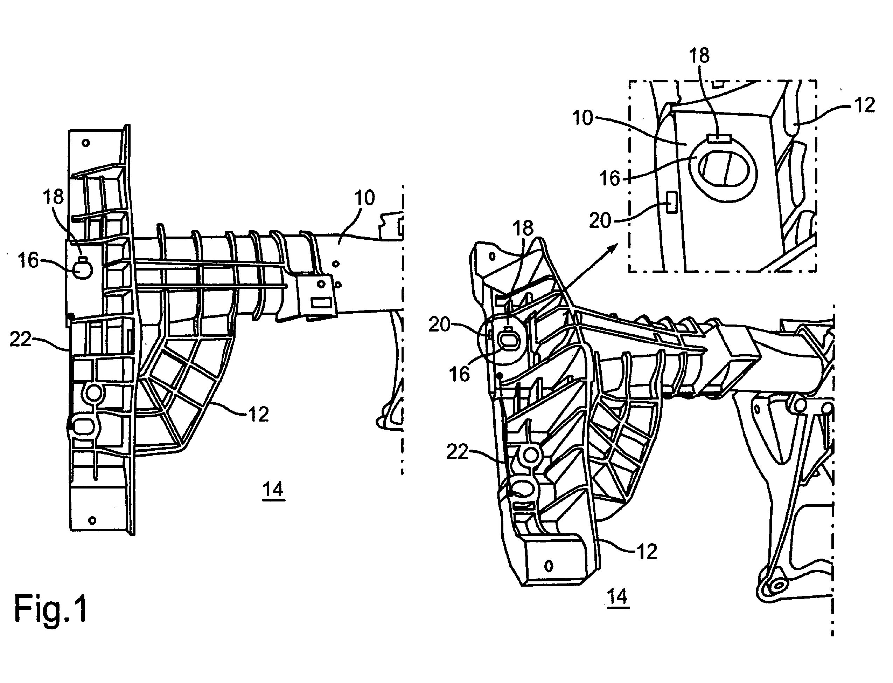

Die Fig. 1 zeigt einen Querträger 10, welcher aus Aluminium gebildet ist und mit einem Kunststoff 12 zu einem Hybridbauteil 14 ergänzt ist. In der Fig. 1 ist dabei eine linke Seite des Querträgers 10 gezeigt, der in einer Karosserie eines Kraftwagens beispielsweise als Instrumententräger einsetzbar ist. Zur Einsparung von zusätzlichen Massekabeln eines Kabelsatzes von elektrischen und/oder elektronischen Komponenten des Kraftwagens fungiert der Querträger 10 als Masseleiter. Dazu ist er mit einer aus Stahl gebildeten A-Säule der Karosserie galvanisch koppelbar.

Eine Möglichkeit dieser galvanischen Kopplung ist dadurch realisiert, dass eine Stahlbuchse 16 in den Querträger 10 selbstfurchend eingeschraubt ist, wodurch eine eine elektrische Kontaktierung zwischen der Stahlbuchse 16 und dem Querträger 10 negativ beeinflussende Oxidschicht, welche das Aluminium des Querträgers 10 mit Umgebungsluft ausbildet, durch das Furchen durchbrochen ist, wodurch die elektrische Kontaktierung zwischen dem Querträger 10 und der Stahlbuchse 16 aktiviert wird. Alternativ kann die Stahlbuchse 16 auch in die Durchgangsöffnung des Querträgers 10 eingepresst sein. Zur Verbesserung der elektrischen Kontaktierung ist zwischen der Stahlbuchse 16 und dem Querträger 10 ist eine Leiterbahn 18 zwischen dem Querträger 10 und der Stahlbuchse 16 aufgespritzt, wodurch eine elektrische Kontaktierung zwischen der Leiterbahn 18 und dem Querträger 10 erfolgt. Die Dauerhaftigkeit der Kontaktierung entsteht dadurch, dass das Spritzmaterial die Oxidhaut des Querträgers 10 beim Anspritzen unter Luftabschluss durchschlägt, wobei die Leiterbahn 18 die Oberfläche des Querträgers 10 überragend schichtartig aufgebaut oder in einem Anspritzschuss gebildet wird. Eine Neubildung der die elektrischen Kontaktierung zwischen der Leiterbahn 18 und dem Querträger 10 negativ beeinflussenden Oxidschicht wird durch das Anspritzen der Leiterbahn 18 verhindert.

Die galvanische Kopplung des Querträgers 10 bzw. des Hybridbauteils 14 mit der A-Säule erfolgt dabei dann über die Leiterbahn 18 und eben die A-Säule.

Eine weitere Möglichkeit der galvanischen Kopplung zwischen dem Querträger 10 bzw. dem Hybridbauteil 14 und der A-Säule der Karosserie des Kraftwagens ist dadurch ermöglicht, dass eine Leiterbahn 20 auf den Querträger 10 aufgespritzt ist, wodurch eine elektrische Kontaktierung zwischen dem Querträger 10 und der elektrischen Leiterbahn dadurch geschaffen ist, dass die beschriebene Oxidschicht dauerhaft vermieden ist, wobei die galvanische Kopplung zwischen dem Querträger 10 bzw. dem Hybridbauteil 14 und der A-Säule eben wieder über die Leiterbahn 20 erfolgt. Der Durchschlag des Materials der Leiterbahn 20 durch die Oxidhaut ist in diesem Ausführungsbeispiel der alleinige Grund für die Aktivierung der elektrischen Leitung zwischen dem Trägerbauteil und Karosserieelement.

Eine weitere Möglichkeit dieser galvanischen Kopplung besteht in einer Leiterbahn 22, welche bereichsweise auf dem Querträger 10 als auch bereichsweise auf dem Kunststoff 12 des Bauteils 14 aufgespritzt ist. Dadurch ist eine elektrische Kontaktierung zwischen der Leiterbahn 22 und dem Querträger 10 auf die bereits beschriebene Art und Weise realisiert. Zum anderen ist eine auf Grund der relativ großen Erstreckung der Leiterbahn 22 großflächige galvanische Kopplung des Querträgers 10 bzw. des Hybridbauteils 14 mit der A-Säule möglicht.

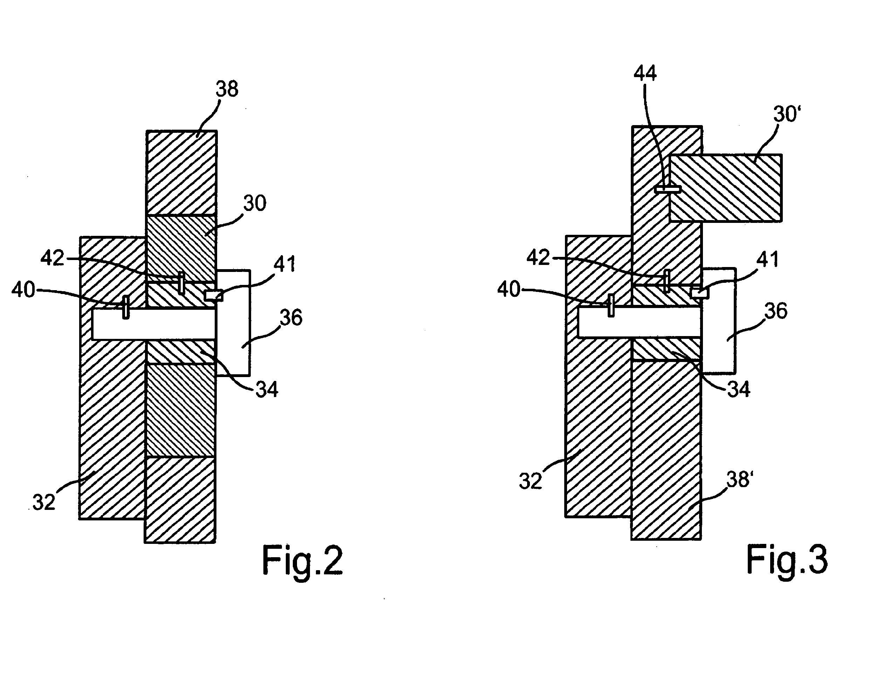

Die Fig. 2 zeigt ein Aluminiumrohr 30, welches als Rohr eines Querträgers 10 einer Karosserie eines Kraftwagens einsetzbar ist. Zur galvanischen Kopplung des Aluminiumrohrs 30 mit einer A-Säule 32 der Karosserie des Kraftwagens ist eine Stahlbuchse 34 in das Aluminiumrohr 30 eingeschraubt. Zur Verbindung des Aluminiumrohrs 30 mit der A-Säule 32, welche aus Stahl gebildet ist, ist eine Stahlschraube 36 vorgesehen, die bereichsweise sowohl in die A-Säule 32 als auch die Stahlbuchse 34 eingreift.

Das Aluminiumrohr 30 ist dabei mit einem Kunststoff 38 zu einem Hybridbauteil ergänzt. Zur galvanischen Kopplung des Aluminiumrohrs 30 mit der A-Säule 32 sind drei Kontaktstellen 40, 41 und 42 vorgesehen. Die Kontaktstelle 40 ist dabei die Kontaktstelle zwischen der A-Säule 32 und der Stahlschraube 36. Die Kontaktstelle 41 ist die Kontaktstelle zwischen der Stahlschraube 36 und der Stahlbuchse 34. Und die Kontaktstelle 42 stellt die Kontaktstelle zwischen der Stahlbuchse 34 und dem Aluminiumrohr 30 dar. Derartige galvanische Kopplungen sind bekannt und bzgl. eines Luftabschlusses als kritisch zu beurteilen. Eine Aktivierung der elektrischen Kontaktierung zwischen der Stahlbuchse 34 und dem Aluminiumrohr 30 ist dabei durch einen Einschraubvorgang der Stahlbuchse realisiert, wodurch eine Oxidschicht des Aluminiumrohrs 30 zur besseren elektrischen Kontaktierung durchbrochen wird.

Bei der in Fig. 2 dargestellten galvanischen Kopplung ist jedoch trotzdem der vollständige Luftabschluss fraglich, wobei es zumindest auf längere Sicht zu einer Neubildung der erwähnten Oxidschicht des Aluminiumrohrs 30 erfolgen kann, was die elektrische Kontaktierung zwischen dem Aluminiumrohr 30 und der Stahlbuchse 34 negativ beeinflusst. Die galvanische Kopplung ist mittels zumindest einer in der Fig. 1 dargestellten Leiterbahn deutlich verbesserbar, die zwischen der Stahlbuchse 34 und dem Aluminiumrohr 30 durch Anspritzen hergestellt wird. Da die Stahlbuchse 34 und die Stahlschraube 36 eine relativ große Kontaktfläche in der Kopplung zwischen dem Aluminiumrohr 30 und der A-Säule 32 darbieten, wird die Ableitung elektrischen Stroms in die A-Säule erheblich verbessert.

In der Fig. 3 bezeichnen gleiche Bezugszeichen gleiche Elemente wie in der Fig. 2.

Die Fig. 3 zeigt eine weitere Möglichkeit einer galvanischen Kopplung eines Aluminiumrohrs 30' mit der A-Säule 32 der Karosserie des Kraftwagens, wobei das Aluminiumrohr 30' wiederum als Querträger der Karosserie fungiert. Auch in der Fig. 3 ist das Aluminiumrohr 30' mit einem Kunststoff 38' zu einem Hybridbauteil ergänzt.

Wie in der Fig. 3 zu sehen ist, ist wiederum die Stahlbuchse 34 vorgesehen, in die die Stahlschraube 36 bereichsweise eingreift. Zudem greift die Stahlschraube 36 wie schon in Fig. 2 bereichsweise in die A-Säule 32 der Karosserie ein. In diesem Falle allerdings ist die Stahlbuchse 34 nicht in das Aluminiumrohr 30' eingeschraubt sondern in den Kunststoff 38' des Hybridbauteils. Zur galvanischen Kopplung des Aluminiumrohrs 30' mit der A-Säule 32 zur Verwendung des Aluminiumrohrs 30' als Massenleiter für elektrische und/oder elektronische Komponenten der Karosserie des Kraftwagens sind wiederum die Kontaktstellen 40, 41 und 42 von Nöten. Zudem existiert eine vierte Kontaktstelle 44, welche die Kontaktstelle zwischen dem Kunststoff 38' und dem Aluminiumrohr 30' darstellt.

Die galvanische Kopplung zwischen dem Aluminiumrohr 30' und der A-Säule 32 ist dabei derart realisierbar, dass zumindest eine in Bezug zu Fig. 1 beschriebene Leiterbahn auf das Aluminiumrohr 30' und gegebenenfalls auf den Kunststoff 38' aufgespritzt wird, die also dann eine galvanische Kopplung zwischen dem Hybridbauteil - gebildet durch das Aluminiumrohr 30' und den Kunststoff 38' - und der A-Säule 32 ermöglicht.

Alternativ kann vorgesehen sein, dass der Kunststoff 38' als elektrisch leitfähiger Kunststoff ausgebildet ist, wodurch eine elektrische Kontaktierung zwischen dem Aluminiumrohr 30' und dem Kunststoff 38' und damit eine galvanische Kopplung zwischen dem Aluminiumrohr 30' und der A-Säule ermöglicht ist, wodurch also das Aluminiumrohr 30' als Masseleiter für die genannten elektrischen und/oder elektronischen Komponenten einsetzbar ist.

## Patentansprüche

1. Trägerbauteil (14) für eine Karosserie eines Kraftwagens, mit zumindest einem im Wesentlichen aus einem Leichtbauwerkstoff gebildeten Trägerelement (10, 30, 30'), welches über wenigstens ein Kopplungselement (18, 20, 22) mit einem Karosserieelement (32) galvanisch koppelbar ist,
**dadurch gekennzeichnet, dass**
das Kopplungselement (18, 20, 22) als eine auf das Trägerelement (10, 30, 30') aufgespritzte Leiterbahn (18, 20, 22) ausgebildet ist.

2. Trägerbauteil (14) nach Anspruch 1,
**dadurch gekennzeichnet, dass**
das das Trägerelement (10, 30, 30'), das bevorzugt im Wesentlichen aus Aluminium oder Magnesium besteht, mit einem Kunststoff (12, 38, 38') und/oder dem leitfähigen Kunststoff (12, 38, 38') zu einem Hybridbauteil (14) vorzugsweise durch ein Spritzgussverfahren ergänzt ist.

3. Trägerbauteil (14) nach einem der Ansprüche 1 oder 2,
die Leiterbahn (18) zwischen einer zumindest bereichsweise in dem Trägerelement (10, 30') angeordneten Stahlbuchse (16, 34) und dem Trägerelement (10, 30') ausgebildet ist.

4. Trägerbauteil (14) nach einem der Ansprüche 1 bis 3,
**dadurch gekennzeichnet, dass**
die Leiterbahn (22) zumindest bereichsweise auf den Kunststoff (12, 38. 38') aufgebracht ist.

5. Verfahren zum Herstellen eines Trägerbauteils (14) für eine Karosserie eines Kraftwagens, bei welchem zumindest ein im Wesentlichen aus einem Leichtbauwerkstoff gebildetes Trägerelement (10, 30, 30') mit wenigstens einem Kopplungselement (18, 20, 22) zur galvanischen Kopplung mit einem Karosserieelement (32) versehen wird,
**dadurch gekennzeichnet, dass**
das Kopplungselement (18, 20, 22) als Leiterbahn (18, 20, 22) auf das Trägerelement (10, 30, 30') vorzugsweise durch ein Flammspritzverfahren oder Kaltgasspritzverfahren aufgespritzt wird.

6. Verfahren nach Anspruch 5,
**dadurch gekennzeichnet, dass**
das Trägerelement (18, 20, 22) mit einem Kunststoff (12, 38, 38') bzw. mit dem leitfähigen Kunststoff (12, 38, 38') zu einem Hybridbauteil (14) vorzugsweise durch ein Spritzgussverfahren ergänzt wird.

7. Verfahren nach einem der Ansprüche 5 oder 6,
**dadurch gekennzeichnet, dass**
das Trägerelement (10, 30, 30') durch einen Innenhochdruckumformprozess umgeformt wird.

8. Verfahren nach Anspruch 7,
**dadurch gekennzeichnet, dass**
das Spritzgussverfahren und der Innenhochdruckumformprozess in dem gleichen Werkzeug durchgeführt werden.

9. Verfahren nach einem der Ansprüche 5 bis 8,
**dadurch gekennzeichnet, dass**
die Leiterbahn (18, 20, 22) zumindest bereichsweise auf den Kunststoff (12, 38, 38') aufgebracht wird.

10. Verfahren nach einem der Ansprüche 5 bis 9,
**dadurch gekennzeichnet, dass**
vor der Ausbildung des Kopplungselements (12, 38, 38') eine Oxidschicht des Trägerelements (10, 30, 30') zumindest bereichsweise abgetragen wird.

## Claims

1. Structural member component (14) for a body of a motor vehicle, comprising at least one member element (10, 30, 30') which is substantially made of a light-weight material and which can be galvanically coupled to a body element (32) via at least one coupling element (18, 20, 22),
**characterised in that**
the coupling element (18, 20, 22) is designed as a conductor track (18, 20, 22) sprayed onto the member element (10, 30, 30').

2. Structural member component (14) according to claim 1,
**characterised in that**
the member element (10, 30, 30'), which is preferably made substantially of aluminium or magnesium, is supplemented by a plastic material (12, 38, 38') and/or the conductive plastic material (12, 38, 38') to produce a hybrid component (14), preferably in an injection moulding process.

3. Structural member component (14) according to claim 1 or 2,
**characterised in that**
the conductor track (18) is formed between a steel bushing (16, 34), which is at least in some regions located in the member element (10, 30'), and the member element (10, 30').

4. Structural member component (14) according to any of claims 1 to 3,
**characterised in that**
the conductor track (22) is at least in some regions applied to the plastic material (12, 38, 38').

5. Method for producing a structural member component (14) for a body of a motor vehicle, wherein a member element (10, 30, 30') which is substantially made of a light-weight material is provided with at least one coupling element (18, 20, 22) for galvanic coupling to a body element (32),
**characterised in that**
the coupling element (18, 20, 22) is applied as a conductor track (18, 20, 22) to the member element (10, 30, 30'), preferably in a flame spraying process or in a cold gas spraying process.

6. Method according to claim 5,
**characterised in that**
the member element (18, 20, 22) is supplemented by a plastic material (12, 38, 38') and/or the conductive plastic material (12, 38, 38') to produce a hybrid component (14), preferably in an injection moulding process.

7. Method according to claim 5 or 6,
**characterised in that**
the member element (10, 30, 30') is formed in a hydroforming process.

8. Method according to claim 7,
**characterised in that**
the injection moulding process and the hydroforming process are carried out in one and the same tool.

9. Method according to any of claims 5 to 8,
**characterised in that**
the conductor track (18, 20, 22) is applied to the plastic material (12, 38, 38') in at least some regions.

10. Method according to any of claims 5 to 9,
**characterised in that**
an oxide layer of the member element (10, 30, 30') is removed at least in some regions before the formation of the coupling element (12, 38, 38').

## Revendications

1. Composant porteur (14) pour une carrosserie d'un véhicule automobile, doté d'au moins un élément porteur (10, 30, 30'), formé essentiellement d'une matière légère, ledit élément porteur pouvant être couplé galvaniquement par au moins un élément d'accouplement (18, 20, 22) à un élément de carrosserie (32), **caractérisé en ce que** l'élément d'accouplement (18, 20, 22) est formé en tant que piste conductrice (18, 20, 22) appliquée au pistolet sur l'élément porteur (10, 30, 30').

2. Composant porteur (14) selon la revendication 1, **caractérisé en ce que** l'élément porteur (10, 30, 30') qui se compose de préférence essentiellement d'aluminium ou de magnésium, doté d'une matière plastique (12, 38, 38') et/ou de la matière plastique conductrice (12, 38, 38') est ajouté à un composant hybride (14) de préférence selon un procédé de moulage par injection.

3. Composant porteur (14) selon l'une quelconque des revendications 1 ou 2, la piste conductrice (18) est conçue entre une douille en acier (16, 34) disposée au moins en partie dans l'élément porteur (10, 30') et l'élément porteur (10, 30').

4. Composant porteur (14) selon l'une quelconque des revendications 1 à 3, **caractérisé en ce que** la piste conductrice (22) est appliquée au moins en partie sur la matière plastique (12, 38, 38').

5. Procédé de production d'un composant porteur (14) pour une carrosserie d'un véhicule automobile, selon lequel au moins un élément porteur (10, 30, 30') formé essentiellement d'une matière légère doté au moins d'un élément d'accouplement (18, 20, 22) est destiné à être couplé galvaniquement à un élément de carrosserie (32), **caractérisé en ce que** l'élément d'accouplement (18, 20, 22) est appliqué au pistolet en tant que piste conductrice (18, 20, 22) sur l'élément porteur (10, 30, 30') de préférence selon un procédé de métallisation à la flamme ou selon un procédé de pulvérisation de gaz à froid.

6. Procédé selon la revendication 5, **caractérisé en ce que** l'élément porteur (18, 20, 22) doté d'une matière plastique (12, 38, 38') ou de la matière plastique conductrice (12, 38, 38') est ajouté à un composant hybride (14) de préférence selon un procédé de moulage par injection.

7. Procédé selon l'une quelconque des revendications 5 ou 6, **caractérisé en ce que** l'élément porteur (10, 30, 30') est déformé par un procédé de moulage à haute pression interne.

8. Procédé selon la revendication 7, **caractérisé en ce que** le procédé de moulage par injection et le procédé de moulage à haute pression interne sont mis en oeuvre dans le même outil.

9. Procédé selon l'une quelconque des revendications 5 à 8, **caractérisé en ce que** la piste conductrice (18, 20, 22) est appliquée au moins en partie sur la matière plastique (12, 38, 38').

10. Procédé selon l'une quelconque des revendications 5 à 9, **caractérisé en ce qu'**avant la formation de l'élément d'accouplement (12, 38, 38') une couche d'oxyde de l'élément porteur (10, 30, 30') est retirée au moins en partie.
